# EUROPÄISCHE PATENTSCHRIFT

(11) **EP 2 020 067 B1**
(45) Veröffentlichungstag und Bekanntmachung des Hinweises auf die Patenterteilung: **17.01.2018**
(21) Anmeldenummer: 07725267.4
(22) Anmeldetag: 16.05.2007
(51) Int. Cl.: H02H 3/00

(54) **VORRICHTUNG ZUM SELBSTTÄTIGEN ABSCHALTEN ODER SCHALTEN EINES ELEKTRISCHEN VERBRAUCHERS**
DEVICE FOR AUTOMATICALLY SWITCHING OFF OR SWITCHING ON AN ELECTRICAL CONSUMER
DISPOSITIF DE MISE HORS CIRCUIT OU MISE EN CIRCUIT AUTOMATIQUE D'UN RÉCEPTEUR ÉLECTRIQUE

(30) Priorität: 24.05.2006 DE 102006025605
(43) Veröffentlichungstag der Anmeldung: 04.02.2009
(73) Patentinhaber: Friedrich Lütze GmbH, 71384 Weinstadt-Grossheppach (DE)
(72) Erfinder: SCHINDLER, Andreas, 73630 Remshalden (DE); COORS, Ralf, 96170 Priesendorf (DE); JÜNGLING, Klaus, 74232 Abstatt (DE)
(74) Vertreter: Crazzolara, Helmut
(86) Internationale Anmeldenummer: PCT/EP2007/004351
(87) Internationale Veröffentlichungsnummer: WO 2007/134766

(56) Entgegenhaltungen:
- WO-A-2004/082091
- DE-C1- 10 031 964
- US-A1- 2004 052 024

## Beschreibung

Die Erfindung betrifft eine Vorrichtung zum selbsttätigen Abschalten oder Schalten eines elektrischen Verbrauchers gemäß dem Oberbegriff des Anspruchs 1.

Derartige Vorrichtungen sind vielseitig einsetzbar, insbesondere im Bereich der Industrieautomation und zugehöriger Steuer- und Regelaufgaben. Ein typischer Einbauort sind Unterverteilungen oder Schaltschränke. An derartige Vorrichtungen sind elektrische Verbraucher anschließbar, beispielsweise Aktoren, wie Motoren oder Ventile, oder Sensoren, wie Temperaturfühler oder Druckmesser. Die Anschlusswerte der anzuschließenden Verbraucher, insbesondere deren Anschlussleistung und deren Nennstrom, können dabei unterschiedlich sein, und es muss üblicherweise eine entsprechende Vielfalt an gattungsgemäßen Vorrichtungen vorgehalten werden, insbesondere an den Montageort solcher Vorrichtungen mitgeführt werden.

Aus der WO 00/74196 A1 ist ein Stromverteilungssystem im Niedervoltbereich bekannt, bei dem jedem Stromkreis ein gattungsgemäßer Schutzschalter mit einstellbarer Strombegrenzung als Kurzschluss- und/oder Überlastschutz zugeordnet ist. Die Besonderheit darin liegt, dass im Überlastfall bei Überschreiten einer ersten einstellbaren Stromschwelle eine Sperrung des Leistungsteils nach Ablauf einer ersten einstellbaren Abschaltzeit erfolgt, und im Kurzschlussfall eine Begrenzung des Stromes durch das Leistungsteil auf eine zweite einstellbare Stromschwelle sowie eine Sperrung des Leistungsteils nach Ablauf einer zweiten Abschaltzeit erfolgt. Der bekannte Schutzschalter weist Steuereingänge und Signalausgänge auf, die an eine Signalleitung oder eine Busschnittstelle geführt sind. Die Verbraucher sind nur einpolig mit ihrem jeweiligen Pluspol an dem Schutzschalter angeschlossen, insbesondere sind die Minuspole aller Verbraucher unmittelbar mit dem Minuspol des Netzteils verbunden.

Die Anpassung der Auslösecharakteristik einer gattungsgemäßen Vorrichtung an die anzuschließenden Verbraucher kann häufig endgültig erst vor Ort, d.h. beim Einbau der Vorrichtung vorgenommen werden. Diese Anpassung erfolgt in der Regel durch Auswahl einer geeigneten Vorrichtung aus einer Vielzahl von Vorrichtungen, die werkseitig mit unterschiedlichen Auslösecharakteristiken hergestellt wurden. Beispielsweise können die Vorrichtungen mit unterschiedlichen Nennstromwerten oder mit einer unterschiedlichen Ansprechzeit, nach deren Ablauf die Vorrichtung anspricht, werkseitig hergestellt werden. Zu diesem Zweck wurden beispielsweise normartige Klassifizierungen für Auslösecharakteristiken geschaffen, siehe beispielsweise VDE 0641 oder VDE 0664. Dies erfordert bei der Montage oder Wartung derartiger Vorrichtungen, dass von jeder möglicherweise erforderlichen Type jeweils ein Exemplar vorgehalten werden muss.

Die WO 2004/082091 A1 beschreibt eine Vorrichtung zum selbsttätigen Abschalten oder Schalten eines elektrischen Verbrauchers, wobei die Vorrichtung ein in Reihe mit einer Lastleitung des elektrischen Verbrauchers geschaltetes elektronisches Stellelement sowie eine Steuereinheit aufweist, die anhand einer Auslösecharakteristik einen über die Lastleitung fließenden Strom i(t) auswertet und das elektronische Stellelement ansteuert, insbesondere den elektrischen Verbraucher abschaltet, wobei die Vorrichtung einen mindestens einmal beschreibbaren und mit der Steuereinheit verbundenen Datenspeicher aufweist, wobei die Vorrichtung eine Datenschnittstelle aufweist, über die Daten aus dem Datenspeicher auslesbar sind und/oder Daten in den Datenspeicher einschreibbar sind, wobei die Steuereinheit Parameter des über die Lastleitung fließenden Stromes i(t) in den Datenspeicher einschreibt.

Ein weiterer Leistungsschalter geht aus der DE 100 31 964 C1 hervor.

Der Erfindung liegt daher die Aufgabe zugrunde, eine Vorrichtung bereitzustellen, welche die Nachteile des Standes der Technik überwindet. Insbesondere sollen die aus gattungsgemäßen Vorrichtungen zusammengestellten Systeme kostengünstig in der Herstellung und Wartung, einfach anpassbar an veränderte Gegebenheiten und dabei dennoch dauerhaft zuverlässig im Betrieb sein.

Diese Aufgabe ist durch die im Anspruch 1 bestimmte Vorrichtung gelöst. Besondere Ausführungsarten der Erfindung sind in den Unteransprüchen bestimmt.

Gemäß dem Kennzeichen von Anspruch 1 ist vorgesehen, dass die Steuereinheit Parameter des über die Lastleitung fließenden Stromes i(t) in den Datenspeicher einschreibt und dass die Steuereinheit die in dem Datenspeicher gespeicherten Daten, speziell die Parameter des über die Lastleitung fließenden Stromes i(t), bei der Auswertung des über die Lastleitung fließenden Stromes i(t) berücksichtigt.

In einem Ausführungsbeispiel kann über die Datenschnittstelle mindestens ein Parameter der Vorrichtung eingestellt werden, beispielsweise ein Parameter der Auslösecharakteristik. Auf diese Weise kann die Vorrichtung im montierten und angeschlossenen Zustand an den jeweiligen Anwendungsfall angepasst werden. Die Vorrichtung kann werksseitig mit einem Standard-Parametersatz ausgeliefert werden, von dem mindestens einige Parameter einmalig, mehrmalig oder beliebig oft über die Datenschnittstelle überschrieben werden können. Die Parameter können in einen in der Vorrichtung ohnehin bereits vorhandenen Datenspeicher eingeschrieben werden oder die Vorrichtung kann hierfür einen eigenständigen Datenspeicher aufweisen, der nur über die Datenschnittstelle zugänglich sein kann. Die Datenschnittstelle selbst kann auch als Schnittstelle zu einem Datenspeicher ausgebildet sein, beispielsweise zu einer Speicherkarte, die in einen von der Vorrichtung ausgebildeten Kartensteckplatz eingesteckt werden kann. In diesem Fall kann der Datenspeicher wechselbar mit der Vorrichtung ausgebildet sein. In einer Ausführungsart ist ohne einen eingesteckten Datenspeicher der Betrieb der Vorrichtung nicht möglich.

In einer Ausführungsart ist die Datenschnittstelle eine Busschnittstelle für den Anschluss der Vorrichtung an einen Datenbus, beispielsweise an einen Feldbus. Das zugehörige Schnittstellenprotokoll kann von einer in der Vorrichtung ohnehin bereits vorhandenen Steuereinheit abgearbeitet werden. In diesem Fall ist lediglich eine Erweiterung des Steuerprogramms für die Steuereinheit erforderlich und es fallen diesbezüglich keine zusätzlichen Hardwarekosten an. Alternativ hierzu weist die Vorrichtung einen separaten Schnittstellenbaustein oder einen separaten Mikrocontroller für das Abarbeiten des Schnittstellenprotokolls auf. In diesem Fall ist die Steuereinheit der Vorrichtung nicht mit der Kommunikation über die Schnittstelle belastet.

Die Datenschnittstelle und damit die Vorrichtung kann zu ihrer Identifikation eine Daten- oder Netzwerkadresse aufweisen. Diese Adresse kann fest vorgegeben sein, beispielsweise in der Vorrichtung hartverdrahtet oder unveränderlich elektronisch gespeichert sein. In einer Ausführungsart kann die Adresse auch veränderbar sein, insbesondere einmal, mehrmals oder beliebig oft programmierbar sein. Es ist auch möglich, dass die Vorrichtung im Ausgangszustand eine Standardadresse aufweist, die über die Datenschnittstelle verändert und insbesondere individualisiert werden kann, und zwar entweder über eine Datenleitung, über einen Datenbus oder über den lokalen Anschluss eines Adressen-Programmiergeräts.

In einer Ausführungsart erfolgt die Kommunikation über die Datenschnittstelle nur in einer Richtung, so dass entweder nur Daten, beispielsweise ein Parameter der Auslösecharakteristik, in die Vorrichtung eingelesen werden können, oder es können nur Daten, beispielsweise Identifikationsdaten der Vorrichtung und/oder Störmeldungen, aus der Vorrichtung ausgelesen werden. In einer Ausführungsart ist die Kommunikation über die Datenschnittstelle in beide Richtungen möglich, so dass sowohl Daten aus der Vorrichtung ausgelesen werden können als auch Daten in die Vorrichtung eingelesen werden können.

Die Datenschnittstelle kann für den Anschluss einer Anschlussleitung ausgebildet sein, insbesondere kann die Vorrichtung ein entsprechendes Anschlusselement aufweisen, beispielsweise eine Steck- oder Schraubbuchse. Alternativ oder ergänzend können über die Datenschnittstelle auch drahtlos Daten übertragen werden, beispielsweise unter Anwendung von optischer oder elektromagnetischer Strahlung. Diesbezüglich kann die Datenschnittstelle ein Sende- und/oder Empfangselement für den drahtlosen Datenaustauch aufweisen, beispielsweise eine Photodiode für eine Infrarot-Schnittstelle oder eine Antenne für eine Funkwellen-Schnittstelle.

Über die Datenschnittstelle können auch Daten von der Vorrichtung an eine gegebenenfalls auch entfernt angeordnete Einrichtung übertragen werden, beispielsweise an eine neben- oder übergeordnete Steuereinrichtung. Hierzu kann die Vorrichtung, insbesondere eine in der Vorrichtung angeordnete Steuereinheit, Betriebsdaten der Vorrichtung und/oder des an die Vorrichtung angeschlossenen Verbrauchers ermitteln und über die Datenschnittstelle übertragen.

In einer Ausführungsart werden die ermittelten Daten in dem Datenspeicher mindestens zwischengespeichert, um diese zu vorgegebenen Zeiten, zu bestimmten Ereignissen, wie beispielsweise dem Erreichen einer unteren Grenze des frei verfügbaren Speicherplatzes, oder auf Anfrage der gegebenenfalls auch entfernt angeordneten Einrichtung zu übertragen. Der Anlass für eine Datenübertragung kann auch das Identifizieren eines Störfalles sein, beispielsweise auch das Ansprechen der Sicherung. In diesem Fall kann die Vorrichtung auch sicherstellen, dass die zuletzt ermittelten Daten unverändert gespeichert bleiben und/oder dauerhaft in der Vorrichtung gespeichert sind, um sie für eine spätere Analyse des Störfalls zu erhalten.

In dem Datenspeicher können insbesondere auch die laufenden Betriebsdaten der Vorrichtung und/oder des angeschlossenen Verbrauchers gespeichert sein, beispielsweise der fließende Strom, auftretende Spannungsspitzen, Betriebsspannungsschwankungen, Betriebs- und Umgebungstemperaturen und dergleichen. Diese Daten können entweder von der Vorrichtung selbst oder von der über die Datenschnittstelle anschließbaren Einrichtung daraufhin ausgewertet werden, wie der Betriebs- und Belastungszustand der Vorrichtung und/oder des angeschlossenen Verbrauchers ist. Dadurch können potentielle Störfälle frühzeitig erkannt werden und/oder Wartungsintervalle angepasst werden.

In einem Ausführungsbeispiel ist die Auslösecharakteristik mindestens auch durch den Parameter des Leistungs- oder Stromintegrals bestimmt, d.h. durch das Integral der Leistung oder des über die Lastleitung fließenden Stromes über der Zeit, und der Grenzwert für dieses Integral ist durch das Einstellmittel unmittelbar einstellbar. Um den Einfluss von gegebenenfalls irrelevanten langsamen Veränderungen beispielsweise des Stromwertes herauszufiltern, kann das Integral nur über eine jeweils zurückliegende Integrationszeit gebildet werden, beispielsweise über die jeweils zurückliegenden fünf Sekunden; länger zurückliegende Werte werden bei der Integration nicht mehr berücksichtigt. Die Integrationszeit kann dabei konstant sein, oder ebenfalls manuell oder selbsttätig von der Vorrichtung einstellbar sein, beispielsweise in Abhängigkeit von dem angeschlossenen Verbraucher oder der aktuellen Lastsituation.

In einem Ausführungsbeispiel ist das Stellelement ein Schalterelement, das im Wesentlichen den Strom abschaltet und wieder zuschalten kann. Dies kann durch einen Transistor erfolgen, der außerdem die Möglichkeit bietet, den Laststrom zu regeln, insbesondere zu begrenzen.

Die Vorrichtung kann in Reihe mit dem Verbraucher zwischen einer Versorgungsleitung einer Gleichspannungsversorgung und dem zugehörigen Massepotential geschaltet sein. Im Falle einer Wechselspannungsversorgung liegt die Vorrichtung in Reihe mit dem Verbraucher zwischen einer Phase und dem Nullleiter oder zwischen zwei Phasen. Ein typisches Anwendungsgebiet ist der Einsatz in Gleichstrom-Niederspannungsversorgungen mit einer Nennspannung von 24 V. Die Vorrichtung kann dabei in einem Gehäuse angeordnet sein, mittels dem die Vorrichtung lösbar auf einer Tragschiene festlegbar ist und auf der Tragschiene an weitere erfindungsgemäße Vorrichtungen und/oder an andere Komponenten der elektrischen Installation, wie beispielsweise Einspeiseklemmen, Signalisierungselemente und dergleichen, anreihbar ist.

Zwei wesentliche Parameter der Auslösecharakteristik sind der Nennstromwert und die Abhängigkeit einer Ansprechzeit, nach deren Ablauf das Stellelement angesteuert wird, von dem tatsächlichen Laststrom. In einem Ausführungsbeispiel weist die Vorrichtung ein einziges Einstellmittel auf, mit dem diese beiden Parameter gleichzeitig verändert werden. Beispielsweise kann durch ein stufenförmiges, insbesondere dreistufiges Einstellmittel zwischen einer genormten Auslösecharakteristik B oder C für einen Leitungsschutz, G oder K für einen Schutz nachgeschalteter Geräte und Motoren, oder Z für einen Schutz von Halbleiterbauelementen und Messkreisen von Spannungswandlern gewählt werden.

Der zeitliche Verlauf des über die Lastleitung fließenden Stromes kann auf unterschiedliche Weise ausgewertet werden. Im einfachsten Fall wird ein Überschreiten des eingestellten oder vorgegebenen Maximalstromes oder Nennstromes registriert und daraufhin das Stellelement schnellstmöglich und insbesondere ohne gesteuerte Verzögerung abgeschaltet und dadurch der Stromkreis zum Verbraucher unterbrochen. In vielen Anwendungsfällen ist dagegen die Leistungs- oder Energieaufnahme zum Verbraucher entscheidend, wohingegen sehr kurzzeitige Stromspitzen toleriert werden können. Um für diese Anwendungsfälle eine geeignete Auslösecharakteristik bereitzustellen, kann es vorteilhaft sein, jedenfalls auch parallel zur Beurteilung des fließenden Stromes das Integral des Stromes i(t) über der Zeit oder auch das Integral des Stromes i(t) im Quadrat über der Zeit zu erfassen oder zu berechnen und beim Auslöseverhalten zu berücksichtigen.

Im Falle einer mikrocontrollerbasierten Steuereinheit können die Stromwerte in regelmäßigen Abständen erfasst und digital weiterverarbeitet werden. Die so erhaltenen Stromwerte können mit in der Steuereinheit oder der Vorrichtung abgespeicherten Werten verglichen werden. Die Zeit zwischen zwei Abtastwerten für den über die Lastleitung fließenden Strom kann dabei konstant sein, insbesondere aus einem Takt der Steuereinheit abgeleitet sein, oder variabel, beispielsweise automatisch in Abhängigkeit der Stromänderung di(t)/dt gewählt werden, um auch bei sehr schnellen Änderungen des Stromes erforderlichenfalls noch sicher abschalten zu können.

In einer Ausführungsart ist die Vorrichtung mindestens zweipolig, vorzugsweise allpolig mit der gegebenenfalls mehrphasigen Versorgungsleitung elektrisch verbindbar. Dadurch sind die Diagnosemöglichkeiten erhöht, beispielsweise können Fehlerstrommessungen oder Isolationsmessungen durchgeführt werden, und die Signalentkopplung in einem System mit mehreren gattungsgemäßen Vorrichtungen ist verbessert.

In einem Ausführungsbeispiel ist der Verbraucher mindestens zweipolig, vorzugsweise allpolig an der Vorrichtung anschließbar. Dadurch ist eine klare Zuordnung des Verbrauchers zu der zugehörigen Vorrichtung gewährleistet. In einem Störfall kann nur der betroffene Verbraucher abgeschaltet werden, wohingegen die weiteren Verbraucher in Betrieb bleiben. Dadurch ist die Ausfallzeit des zugehörigen Gesamtsystems reduziert.

In einer Ausführungsart weist die Vorrichtung mindestens ein Trennelement zum galvanischen Trennen der Vorrichtung von dem Verbraucher und/oder der Versorgungsleitung auf. Das Trennelement kann in Reihe zu dem Stellelement liegen und von der Steuereinheit steuerbar sein. Dadurch ist eine zusätzliche Sicherheit für den Fall gegeben, dass das in einem Ausführungsbeispiel durch ein Halbleiterbauelement gebildete Stellelement ausfällt, insbesondere einen Kurzschluss aufweist. Das Trennelement kann durch ein elektromagnetisches Relais realisiert sein. Wenn eine noch höhere Sicherheit gefordert ist, kann alternativ oder zusätzlich zum Trennelement eine an sich bekannte Schmelzsicherung in Reihe geschaltet sein.

Im Fall eines Auslösens der Vorrichtung kann diese entweder im ausgeschalteten Zustand verharren oder nach einer vorgegebenen Zeitdauer selbsttätig wieder in den eingeschalteten Zustand übergehen, insbesondere durch langsames Durchsteuern des Stellelements und gleichzeitiger Ermittlung des über die Lastleitung fließenden Stroms. Sollte dieser weiterhin unzulässig hoch sein, kann die Vorrichtung nach einer vorgebbaren Anzahl derartiger Versuche in einen dauerhaft ausgeschalteten Zustand übergehen. Alternativ oder ergänzend hierzu kann die Vorrichtung auch ein Rücksetzelement aufweisen, wobei dieses auch durch einen entsprechenden Signaleingang gebildet sein kann, über den die Vorrichtung ein Rücksetzsignal von einer über- oder nebengeordneten Steuereinrichtung erhält. Weiterhin alternativ oder ergänzend kann das Rücksetzelement auch von außerhalb der Vorrichtung unmittelbar manuell oder mittelbar mit einem Werkzeug manuell betätigbar sein, beispielsweise durch eine Rücksetztaste unmittelbar an der Vorrichtung. In einem Ausführungsbeispiel ist nur ein manuelles Rücksetzen möglich, insbesondere erfolgt keine automatische Rücksetzung. Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind.
- Fig. 1: zeigt eine Seitenansicht eines Ausführungsbeispiels einer erfindungsgemäßen Vorrichtung;
- Fig. 2: zeigt eine perspektivische Ansicht einer Anordnung von insgesamt sieben erfindungsgemäßen Vorrichtungen;
- Fig. 3: zeigt beispielhaft die Einstellbarkeit der Auslösecharakteristik; und

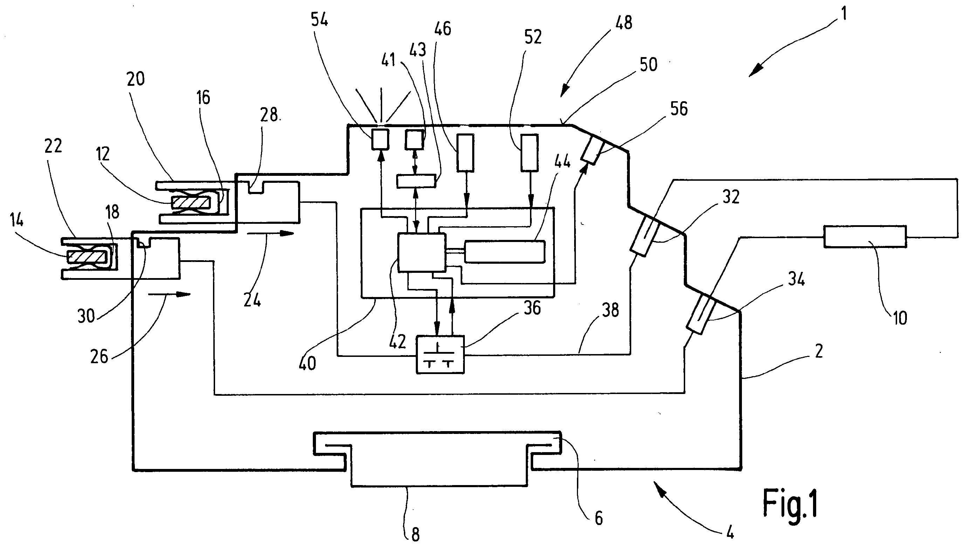

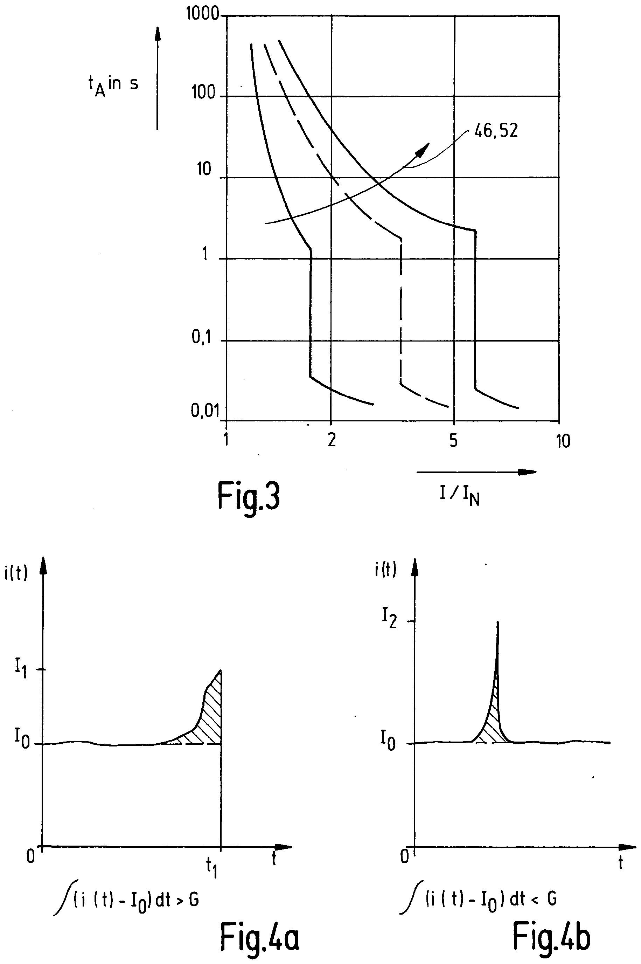

Fig. 4a und 4b zeigen zwei mögliche Signalverläufe für den Laststrom i(t). Die Fig. 1 zeigt eine Seitenansicht eines Ausführungsbeispiels einer erfindungsgemäßen Vorrichtung 1 mit abgenommenem Gehäusedeckel. Die Vorrichtung 1 weist ein prismenförmiges Gehäuse 2 aus Kunststoff auf, wobei die planparallelen Grund- und Deckflächen parallel zur Zeichenebene liegen. Auf einer im eingebauten Zustand in der Regel nicht sichtbaren Unterseite 4 weist das Gehäuse 2 eine hinterschnittene Nut 6 auf, mittels der das Gehäuse 2 auf einer nur symbolisch dargestellten und senkrecht zur Zeichenebene sich erstreckende Trag- oder Hutschiene 8 festlegbar ist. Die Vorrichtung 1 dient zum Schutz elektrischer Installationen durch Begrenzen der Strom- und/oder Energieaufnahme eines elektrischen Verbrauchers 10 und stellt insbesondere die Funktionalität einer elektronischen rücksetzbaren Lastüberwachung bereit. Die Vorrichtung 1 ist hierzu elektrisch an eine Versorgungsleitung anschließbar. Im Ausführungsbeispiel handelt es sich dabei um eine zweipolige Gleichstrom-Versorgungsleitung mit einer Nennspannung von 12 Volt oder 24 Volt, die durch zwei senkrecht zur Zeichenebene verlaufende Stromschienen 12, 14 bereitgestellt ist. Zum Herstellen der elektrischen Verbindung weist die Vorrichtung 1 für jede Stromschiene 12, 14 ein zugehöriges Kontaktorgan 16, 18 auf, das federelastisch verformbar in einem zugehörigen Kontaktträger 20, 22 angeordnet ist. Der Kontaktträger 20, 22 kann aus einem elektrisch isolierenden Werkstoff bestehen und/oder kann in der Vorrichtung 1 beweglich gelagert sein, im Ausführungsbeispiel entsprechend den Pfeilen 24, 26 rechtwinklig zu den Stromschienen 12, 14 verschiebbar gelagert sein.

Im dargestellten Zustand ist die Vorrichtung 1 zweipolig an die Versorgungsleitung angeschlossen. Die Verbindung mit den Stromschienen 12, 14 kann einzeln hergestellt und unterbrochen werden, wozu die Kontaktträger 20, 26 entweder von außerhalb des Gehäuses 2 unmittelbar manuell bewegbar sind oder mittelbar mit einem Werkzeug manuell bewegbar sind. Im letztgenannten Fall können die Kontaktträger 20, 22 hierzu eine Werkzeugangriffsfläche 28, 30 aufweisen. Im einfachsten Fall kann diese durch eine Vertiefung oder eine Erhebung in der Außenkontur der Kontaktträger 20, 22 gebildet sein. Im Ausführungsbeispiel sind die beiden Kontaktträger 20, 22 einzeln bewegbar. Alternativ hierzu kann auch eine mechanische Kopplung vorgesehen sein, mittels der die beiden Kontaktträger 20, 22 gemeinsam bewegbar sind.

Alternativ zum dargestellten Ausführungsbeispiel kann die Vorrichtung 1 auch nur einpolig mit der Versorgungsleitung verbindbar sein und der zweite Pol der Versorgungsleitung kann über eine gegebenenfalls auch gemeinsam mit weiteren Verbrauchern genutzte und unmittelbar an die Verbraucher 10 angeschlossene Rückleitung verbunden sein.

Der Verbraucher 10 ist ausgangsseitig an der Vorrichtung 1 über Anschlussklemmen 32, 34 anschließbar. Dabei kann es sich um schraubenlose Anschlussklemmen 32, 34 handeln, die mit einem Federkontaktelement ausgerüstet sind und in welche die Anschlussleitung des Verbrauchers 10 nur eingesteckt werden muss.

Im Innern des Gehäuses 2 ist ein elektronisches Stellelement 36, das beispielsweise durch einen MOS-Transistor gebildet ist, in Reihe mit einer das Kontaktorgan 16 mit der Anschlussklemme 32 verbindenden Lastleitung 38 geschaltet. Die Verbindung zwischen dem weiteren Kontaktorgan 18 und der weiteren Anschlussklemme 34 ist im Ausführungsbeispiel durch die Vorrichtung 1 durchgeschleift. Alternativ hierzu kann auch in dieser Verbindungsleitung ein weiteres Stellelement angeordnet sein. Dadurch wäre der Verbraucher 10 allpolig von der Versorgungsleitung abschaltbar und/oder es können Fehlerstrommessungen durchgeführt werden.

In der Vorrichtung ist eine Steuereinheit 40 angeordnet, die eine zentrale Recheneinheit beispielsweise in Form eines Mikrocontrollers 42 aufweist. Dieser ist datentechnisch mit einem Datenspeicher 44 verbunden, der einen Nur-Lese-Bereich und/oder einen frei beschreibbaren Speicherbereich aufweisen kann. Die Energieversorgung der Steuereinheit 40 kann über die Versorgungsleitung erfolgen, insbesondere kann hierzu die Steuereinheit 40 mit den Kontaktorganen 16, 18 verbunden sein. Alternativ oder ergänzend kann in der Vorrichtung 1 auch ein vorzugsweise über die Versorgungsleitung aufladbarer Energiespeicher angeordnet sein, der jedenfalls einen Notbetrieb der Steuereinheit 40 bei einem Ausfall der Versorgungsspannung gewährleistet.

Die Steuereinheit 40 kann über eine Anschlussleitung oder einen Datenbus mit einer neben- oder übergeordneten Steuereinrichtung verbindbar sein und von dort Signale empfangen oder Signale dorthin senden. Hierzu weist die Vorrichtung 1 eine Datenschnittstelle 41 auf, die im dargestellten Ausführungsbeispiel über einen das Protokoll der anzuschließenden Anschlussleitung oder des Datenbusses abarbeitenden Schnittstellenbaustein 43 mit der Steuereinheit 40 und insbesondere mit dem Mikrocontroller 42 verbunden ist. Alternativ hierzu kann der Schnittstellenbaustein 43 auch in der Steuereinheit 40 integriert sein, insbesondere softwaremäßig durch den vorhandenen Mikrocontroller 42 oder durch einen weiteren Mikrocontroller nachgebildet sein. Die über die Datenschnittstelle 41 in den Datenspeicher 44 einzulesenden Daten und/oder die aus dem Datenspeicher 44 auszulesenden Daten werden über den Mikrocontroller 42 geführt. Alternativ hierzu können die Daten auch direkt zwischen dem Datenspeicher 44 und der Datenschnittstelle 41 oder dem Schnittstellenbaustein 43 ausgetauscht werden.

Die Steuereinheit 40 und insbesondere der Mikrocontroller 42 steuert das Stellelement 36, beispielsweise den Gate-Anschluss eines Transistors. Für eine Ermittlung des auf der Lastleitung 38 fließenden Stromes kann entweder in der Lastleitung 38 ein so genannter Shunt-Widerstand angeordnet sein, oder alternativ oder ergänzend kann auch das Stellelement 36 selbst ein Signal an die Steuereinheit 40 zurückgeben, das Rückschlüsse auf den in der Lastleitung 38 fließenden Strom gibt. Beispielsweise kann die an der Gate/Source-Strecke abfallende Spannung erfasst werden, die insbesondere unter Berücksichtigung der Parameter des Stellelements 36 und der sonstigen Betriebsparameter Rückschlüsse auf den auf der Lastleitung 38 fließenden Strom zulässt. Der ermittelte Strom wird anhand einer vorgebbaren und insbesondere im Datenspeicher 44 abgelegten Auslösecharakteristik von dem Mikrocontroller 42 ausgewertet und dementsprechend das Stellelement 36 angesteuert, insbesondere abgeschaltet.

Ein oder mehrere Parameter der Auslösecharakteristik sind durch ein erstes Einstellmittel 46 einstellbar, das von außerhalb der Vorrichtung 1 mechanisch zugänglich ist. Im Ausführungsbeispiel ist das erste Einstellmittel 46 im Bereich einer der Unterseite 4 gegenüberliegenden und zu dieser planparallelen Oberseite 48 angeordnet, und gegenüber der Oberfläche 50 zurückversetzt im Innern des Gehäuses 2 angeordnet. Die Oberseite 50 weist eine Gehäuseöffnung auf, in welche ein Werkzeug einführbar ist, mittels dem das erste Einstellelement 46 betätigbar ist. In entsprechender Weise ist ein zweites Einstellmittel 52 angeordnet, das ebenfalls mit der Steuereinheit 40 verbunden ist. Die Einstellelemente 46, 52 können auch bündig mit der Oberfläche 50 abschließen oder sogar über diese hinausragen. Die Einstellelemente 46, 52 können auch unmittelbar manuell betätigbar sein.

Die Vorrichtung 1 weist weiterhin ein optisches Signalelement 54 auf, das mit der Steuereinheit 40 verbunden ist und den Betriebszustand der Vorrichtung 1 signalisieren kann, beispielsweise durch Aussenden von grünem Licht im Falle eines Normalbetriebs und durch Aussenden von rotem Licht im Falle des Auslösens der Vorrichtung 1. Alternativ oder ergänzend können auch akustische oder sonstige Signalelemente vorgesehen sein.

Weiterhin weist die Vorrichtung 1 einen Störmeldeausgang 56 auf, an dem eine Störleitung anschließbar ist, über welche der Betriebszustand der Vorrichtung 1, insbesondere das Auslösen der Abschaltung, an eine neben- oder übergeordnete Steuereinrichtung signalisiert werden kann. Der Störmeldeausgang 56 kann grundsätzlich identisch wie die Anschlussklemmen 32, 34 ausgebildet sein, insbesondere als schraubenloser Federkontakt.

Die Oberflächen des Gehäuses 2, an denen die Anschlussklemmen 32, 34 und/oder der Störmeldeausgang 56 angeordnet sind, sind plan und verlaufen senkrecht zur Zeichenebene der Fig. 1. Diese Oberflächen sind terrassenförmig hinter- und übereinander angeordnet mit einer Schrägstellung zwischen 10 und 45°, insbesondere etwa 30°, gegenüber der Oberfläche 50, und sind miteinander über rechtwinklig zur Oberfläche 50 angeordnete Verbindungsflächen verbunden. Dadurch ist eine platzsparende Anordnung bei gleichzeitig einfacher Bedienung der Anschlussklemmen 32, 34 auch im eingebauten Zustand der Vorrichtung 1 gewährleistet.

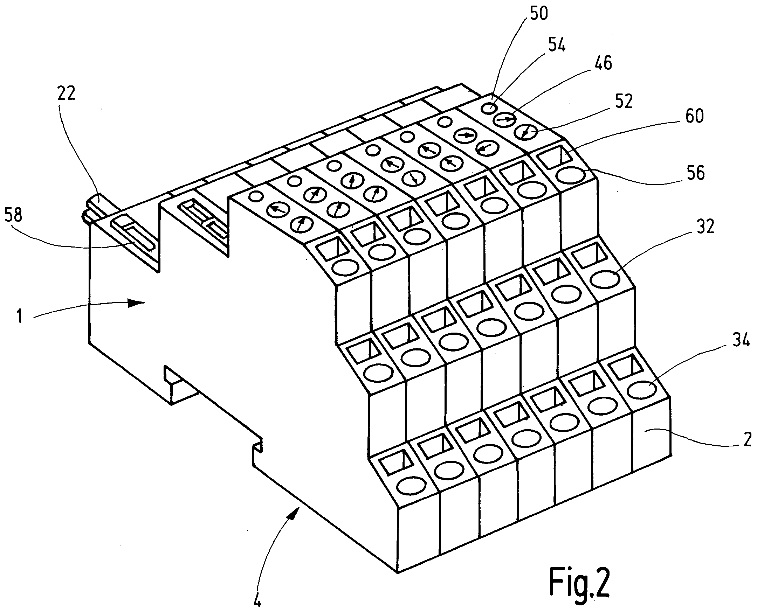

Die Fig. 2 zeigt eine perspektivische Ansicht einer Anordnung von insgesamt sieben erfindungsgemäßen Vorrichtungen 1, die konturengleich aneinandergereiht sind. An der Rückseite ist der erste Kontaktträger 20 nicht sichtbar, weil er sich in der zurückgeschobenen, vollständig im Gehäuse 2 untergebrachten Position befindet. Demgegenüber ist der zweite Kontaktträger 22 in der aus dem Gehäuse 2 herausgeschobenen Position sichtbar, in welcher er (wie in der Fig. 1 dargestellt) die Stromschiene 14 elektrisch kontaktieren kann. Besonders vorteilhaft ist, dass in der zurückgeschobenen Position der beiden Kontaktträger 20, 22 die Vorrichtung 1 auf der Tragschiene 8 befestigt werden kann und auch der elektrische Verbraucher 10 angeschlossen werden kann, während die Vorrichtung 1 noch spannungsfrei ist. Außerdem können auf diese Weise einzelne Vorrichtungen 1 aus dem in der Fig. 2 dargestellten Verbund einzeln herausgelöst oder hinzugefügt werden. Dadurch ist die Montage und auch die Wartung vereinfacht. Auf den parallel zur Unterseite 4 verlaufenden, treppenartig angeordneten Oberflächen auf der Rückseite sind jeweils Öffnungsschlitze 58 vorgesehen, durch die ein von außen manuell zu betätigendes Betätigungsmittel des Kontaktträgers 20, 22 hindurchtreten kann, oder über die ein Werkzeug von außen eingeführt werden kann, mittels dem der Kontaktträger 20, 22 bewegbar ist.

Auf der stirnseitigen Oberfläche 50 sind geradlinig hintereinander das optische Signalelement 54 sowie das erste und zweite Einstellmittel 46, 52 angeordnet. Bei den Einstellmitteln 46, 52 kann es sich beispielsweise um einen drehbaren Stufenschalter und/oder um ein Potentiometer handeln, wobei insbesondere bei der Verwendung eines Potentiometers mindestens eine Zwischen- oder Endposition rastbar ist für eine Grundeinstellung der Auslösecharakteristik. Auf der sich an die Oberfläche 50 anschließenden ersten Schrägfläche ist neben dem Störmeldeausgang 56 eine Öffnung 60 vorgesehen, mittels der die anzuschließende Störmeldeleitung gelöst und/oder auch festgelegt werden kann; in gleicher Weise sind auch die weiteren Schrägflächen ausgerüstet, welche die Anschlussklemmen 32, 34 aufweisen.

Infolge der Aneinanderreihung der Vorrichtungen 1 sind auch die zugehörigen Störmeldeausgänge 56 in einer Reihe geradlinig hintereinander angeordnet. Auf diese Weise können besonders einfach Sammelstörleitungen realisiert werden, beispielsweise indem ein Kontaktkamm in mehrere Störmeldeausgänge eingesteckt ist. Alternativ hierzu kann auch mindestens ein Störmeldeausgang individuell zu einer übergeordneten Steuereinrichtung weitergeleitet werden.

Die Fig. 3 zeigt beispielhaft die Einstellbarkeit der Auslösecharakteristik mittels der Einstellmittel 46, 52, wobei in doppelt-logarithmischer Darstellung die Abhängigkeit der Abschaltzeit t_{A} der Vorrichtung 1 von dem auf den Nennstromwert I_{N} bezogenen Strom I in der Lastleitung 38 dargestellt ist. Wie von Leistungsschutzschaltern her bekannt, kann die Auslösecharakteristik durch eine Kennlinie dargestellt werden. Beispielhaft sind drei zugehörige Kennlinien dargestellt. Der Nennstromwert der Vorrichtung 1, beispielsweise 2 A oder 5 A, ist entsprechend dem anzuschließenden Verbraucher 10 gewählt. Eine erfindungsgemäße Vorrichtung 1 kann lediglich ein einziges Einstellmittel aufweisen, mit dem nur dieser Nennstromwert der Vorrichtung 1 einstellbar ist, bei dessen Erreichen die Vorrichtung 1 den Verbraucher 10 schnellstmöglich abschaltet. Die Kennlinie der Abhängigkeit der Abschaltzeit t_{A} vom Stromwert I in der Lastleitung 38 ist dann unveränderlich.

In einem weiteren Ausführungsbeispiel ist es auch möglich, die Position einer unveränderlichen Kennlinie mit einem Einstellelement horizontal und/ oder vertikal in dem Diagramm der Fig. 3 zu verschieben, d.h. den Stromwert I und/oder die Abschaltzeit t_{A} mit einem Faktor zu multiplizieren. Darüber hinaus kann ein Einstellmittel vorgesehen sein, mit dem auch die Kurvenform der Kennlinie verändert werden kann, beispielsweise wie in der Fig. 3 ausgehend von der linken durchgezogenen Kennlinie über die gestrichelt eingezeichnete Kennlinie bis zu der rechten durchgezogenen Kennlinie dargestellt. Gemäß der rechten durchgezogenen Kennlinie toleriert die Vorrichtung 1 für eine längere Zeit einen höheren Strom I und schaltet beispielsweise bei einem Laststrom, der doppelt so hoch ist wie der Nennstrom, erst nach etwa 30 Sekunden ab. Für Verbraucher 10, bei denen dies nicht toleriert werden kann, kann beispielsweise die linke durchgezogene Kennlinie eingestellt werden, gemäß der ein Laststrom, der doppelt so hoch ist wie der Nennstrom der Vorrichtung 1, nach weniger als 100 ms abgeschaltet wird.

Es sind auch Ausführungsbeispiele möglich, in denen die Form der Kennlinie gezielt einstellbar ist, beispielsweise insgesamt oder abschnittsweise steiler oder flacher ausgebildet werden kann. Die Einstellmittel 46, 52 bieten die Möglichkeit, nahezu beliebige Auslösecharakteristiken nachzubilden, insbesondere die Auslösecharakteristik auch ganz speziell an den jeweils angeschlossenen Verbraucher 10 individuell anzupassen. Vorzugsweise ist beispielsweise im Datenspeicher 44 eine werksseitig eingestellte Auslösecharakteristik vorgegeben, die von den Einstellelementen 46, 52 überschrieben oder verändert werden kann.

In den Figuren 4a und 4b sind zwei mögliche Signalverläufe für den Laststrom i(t) dargestellt. In beiden Fällen beträgt der Nennlaststrom I_{N} = I₀. Im ersten Fall der Fig. 4a führt eine verhältnismäßig langsame aber stetige Erhöhung des Laststroms zum Zeitpunkt t₁ zu einem Abschalten, weil die Fläche unter dem Integral (i(t) - I₀)· dt größer als ein Grenzwert G wird. Im zweiten Ausführungsbeispiel der Fig. 4b erreicht der Laststrom i(t) kurzzeitig zwar einen Spitzenwert I₂, der größer ist als der Strom I₁, es wird aber nicht abgeschaltet, weil das Integral (i(t) - I₀) · dt kleiner als der vorgegebene Grenzwert G bleibt. Je nachdem, welche Rechenoperation auf den Stromverlauf i(t) angewandt wird, beispielsweise auch die Bildung des Integrals (i²(t) - I₀) · dt lassen sich unterschiedliche Verbraucher 10 optimal absichern.

## Patentansprüche

1. Vorrichtung (1) zum selbsttätigen Abschalten oder Schalten eines elektrischen Verbrauchers (10), wobei die Vorrichtung (1) ein in Reihe mit einer Lastleitung (38) des elektrischen Verbrauchers (10) geschaltetes elektronisches Stellelement (36) sowie eine Steuereinheit (40) aufweist, die anhand einer Auslösecharakteristik einen über die Lastleitung (38) fließenden Strom i(t) auswertet und das elektronische Stellelement (36) ansteuert, insbesondere den elektrischen Verbraucher (10) abschaltet, wobei die Vorrichtung (1) einen mindestens einmal beschreibbaren und mit der Steuereinheit (40) verbundenen Datenspeicher (44) aufweist, wobei die Vorrichtung (1) eine Datenschnittstelle (41) aufweist, über die Daten aus dem Datenspeicher (44) auslesbar sind und/oder Daten in den Datenspeicher (44) einschreibbar sind, **dadurch gekennzeichnet, dass** die Steuereinheit (40) Parameter des über die Lastleitung (38) fließenden Stromes i(t) in den Datenspeicher (44) einschreibt und dass die Steuereinheit (40) die in dem Datenspeicher (44) gespeicherten Daten, speziell die Parameter des über die Lastleitung (38) fließenden Stromes i(t), bei der Auswertung des über die Lastleitung (38) fließenden Stromes i(t) berücksichtigt.

2. Vorrichtung (1) nach Anspruch 1, **dadurch gekennzeichnet, dass** die Steuereinheit (40) regelmäßig, insbesondere in vorgebbaren Zeitabständen, Parameter des über die Lastleitung (38) fließenden Stromes i(t) in den Datenspeicher (44) einschreibt.

3. Vorrichtung (1) nach Anspruch 1 oder 2, **dadurch gekennzeichnet, dass** die Steuereinheit (40) anlässlich vorgebbarer Ereignisse, insbesondere abhängig von dem Momentanwert des über die Lastleitung (38) fließenden Stromes, Parameter des über die Lastleitung (38) fließenden Stromes i(t) in den Datenspeicher (44) einschreibt.

4. Vorrichtung (1) nach einem der Ansprüche 1 bis 3, **dadurch gekennzeichnet, dass** die Steuereinheit (40) ein für die Datenschnittstelle (41) definiertes Datenprotokoll abarbeitet.

5. Vorrichtung (1) nach einem der Ansprüche 1 bis 4, **dadurch gekennzeichnet, dass** die Vorrichtung (1) einen Schnittstellenbaustein (43) aufweist, der ein für die Datenschnittstelle (41) definiertes Datenprotokoll abarbeitet.

6. Vorrichtung (1) nach einem der Ansprüche 1 bis 5, **dadurch gekennzeichnet, dass** die Datenschnittstelle (41) eine Busschnittstelle ist, mittels der unidirektional oder bidirektional Daten zwischen der Vorrichtung (1) und einer über- oder nebengeordneten Steuerung austauschbar sind.

7. Vorrichtung (1) nach einem der Ansprüche 1 bis 6, **dadurch gekennzeichnet, dass** über die Datenschnittstelle (41) drahtlos Daten aus dem Datenspeicher (44) auslesbar und/oder Daten in den Datenspeicher (44) einschreibbar sind, insbesondere dass die Datenschnittstelle (41) eine Infrarot-Schnittstelle oder eine Funkwellen-Schnittstelle ist.

8. Vorrichtung (1) nach einem der Ansprüche 1 bis 7, **dadurch gekennzeichnet, dass** die Vorrichtung (1) in einem Gehäuse (2) angeordnet ist, mittels dem die Vorrichtung (1) auf einer Tragschiene (8) festlegbar ist und auf der Tragschiene (8) anreihbar ist an weitere Vorrichtungen (1) und/oder an andere Komponenten der elektrischen Installation.

## Claims

1. A device (1) for automatically switching off or switching an electrical consumer (10), the device (1) having an electronic actuating element (36) and a control unit (40) connected in series with a load line (38) of the electrical consumer (10) and which evaluates a current i(t) flowing via the load line (38) by means of a trigger characteristic and controls the electronic actuating element (36), and in particular switches off the electrical consumer (10), the device (1) having an at least write-once data memory (44) connected to the control unit (40), the device (1) having a data interface (41) via which data can be read out of the data memory (44) and/or data can be written into the data memory (44), **characterised in that** the control unit (40) writes parameters of the current i(t) flowing via the load line (38) into the data memory (44), and that the control unit (40) takes into account the data stored in the data memory (44), especially the parameters of the current i(t) flowing via the load line (38) when evaluating the current i(t) flowing via the load line (38).

2. The device (1) according to Claim 1, **characterised in that** the control unit (40) regularly, in particular at pre-definable intervals of time, writes parameters of the current i(t) flowing via the load line (38) into the data memory (44).

3. The device (1) according to Claim 1 or 2, **characterised in that** upon the occurrence of pre-definable events, in particular dependently upon the momentary value of the current flowing via the load line (38), the control unit (40) writes parameters of the current i(t) flowing via the load line (38) into the data memory (44).

4. The device (1) according to any of Claims 1 to 3, **characterised in that** the control unit (40) runs a data protocol defined for the data interface (41).

5. The device (1) according to any of Claims 1 to 4, **characterised in that** the device (1) has an interface component (43) which runs a data protocol defined for the data interface (41).

6. The device (1) according to any of Claims 1 to 5, **characterised in that** the data interface (41) is a bus interface by means of which data can be exchanged unidirectionally or bidirectionally between the device (1) and a superordinate or subordinate control.

7. The device (1) according to any of Claims 1 to 6, **characterised in that** data from the data memory (44) can be read out and/or data can be written into the data memory (44) wirelessly via the data interface (41), in particular that the data interface (41) is an infrared interface or a radio wave interface.

8. The device (1) according to any of Claims 1 to 7, **characterised in that** the device (1) is disposed within a housing (2) by means of which the device (1) can be secured to a support rail (8) and can be lined up alongside other devices (1) and/or other components of the electrical installation on the support rail (8).

## Revendications

1. Dispositif (1) de mise automatique hors circuit ou en circuit d'un récepteur (10) électrique, le dispositif (1) ayant un élément (36) électronique de réglage, monté en série avec une ligne (38) de charge du récepteur (10) électrique ainsi qu'une unité (40) de commande, qui, à l'aide d'une caractéristique de déclenchement, exploite un courant i(t) passant dans la ligne (38) de charge et commande l'élément (36) électronique de réglage, notamment en mettant hors circuit le récepteur (10) électrique, le dispositif (1) ayant une mémoire (44) de données dans laquelle on peut écrire au moins une fois et qui est reliée à l'unité (40) de commande, le dispositif (1) ayant une interface (41) de données, par laquelle les données peuvent être lues dans la mémoire (44) de données et/ou des données peuvent être inscrites dans la mémoire (44) de données, **caractérisé en ce que** l'unité (40) de commande inscrit, dans la mémoire (44) de données, des paramètres du courant i(t) passant dans la ligne (38) de charge et **en ce que** l'unité (40) de commande tient compte, dans l'exploitation du courant i(t) passant dans la ligne (38) de charge, des données mémorisées dans la mémoire (44) de données, spécialement des paramètres du courant i(t) passant dans la ligne (38) de charge.

2. Dispositif (1) suivant la revendication 1, **caractérisé en ce que** l'unité (40) de commande inscrit, dans la mémoire (44) de données, régulièrement, notamment à des intervalles de temps pouvant être donnés à l'avance, des paramètres du courant i(t) passant dans la ligne (38) de charge.

3. Dispositif (1) suivant la revendication 1 ou 2, **caractérisé en ce que** l'unité (40) de commande inscrit, dans la mémoire (44) de données, à l'occasion d'événement pouvant être donné à l'avance, notamment en fonction de la valeur instantanée du courant passant dans la ligne (38) de charge, des paramètres du courant i(t) passant dans la ligne (38) de charge.

4. Dispositif (1) suivant l'une des revendications 1 à 3, **caractérisé en ce que** l'unité (40) de commande établit un protocole de données défini pour l'interface (41) de données.

5. Dispositif (1) suivant l'une des revendications 1 à 4, **caractérisé en ce que** le dispositif (1) a un module (43) d'interface, qui établit un protocole défini pour l'interface (41) de données.

6. Dispositif (1) suivant l'une des revendications 1 à 5, **caractérisé en ce que** l'interface (41) de données est une interface de bus, au moyen de laquelle des données unidirectionnelles ou bidirectionnelles peuvent être échangées entre le dispositif (1) et une commande supérieure hiérarchiquement ou subordonnée.

7. Dispositif (1) suivant l'une des revendications 1 à 6, **caractérisé en ce que**, par l'interface (41) de données, des données peuvent, sans fil, être lues dans la mémoire (44) de données et/ou inscrites dans la mémoire (44) de données, notamment **en ce que** l'interface (41) de données est une interface à infrarouge ou une interface à ondes radio.

8. Dispositif (1) suivant l'une des revendications 1 à 7, **caractérisé en ce que** le dispositif (1) est disposé dans un boîtier (2), au moyen duquel le dispositif (1) peut être fixé sur un profilé (8) porteur et peut être joint sur le profil (8) porteur à d'autres dispositifs (1) et/ou à d'autres composants de l'installation électrique.
